# EUROPÄISCHE PATENTSCHRIFT

(11) **EP 3 127 678 B1**
(45) Veröffentlichungstag und Bekanntmachung des Hinweises auf die Patenterteilung: **01.05.2024**
(21) Anmeldenummer: 15180232.9
(22) Anmeldetag: 07.08.2015
(51) Int. Cl.: B29C 44/34, B29C 44/38, B29C 44/12, B29K 75/00

(54) **VORRICHTUNG UND VERFAHREN ZUR KUNSTSTOFFBESCHÄUMUNG**
DEVICE AND METHOD FOR PLASTIC FOAMING
PROCEDE ET DISPOSITIF DESTINES A FAIRE MOUSSER UNE MATIERE SYNTHETIQUE

(43) Veröffentlichungstag der Anmeldung: 08.02.2017
(73) Patentinhaber: SMP Deutschland GmbH, 79268 Bötzingen (DE)
(72) Erfinder: Ruh, Gerald, 79241 Ihringen/Wasenweiler (DE)
(74) Vertreter: Westphal, Mussgnug & Partner Patentanwälte mbB

(56) Entgegenhaltungen:
- WO-A2-2007/099445
- BE-A- 718 298
- DE-A1- 4 104 237
- DE-A1- 10 350 240
- JP-A- H0 425 414
- JP-A- H03 208 612
- US-A- 5 789 457
- US-A- 6 076 246
- US-A1- 2004 217 498
- US-A1- 2004 229 013

## Beschreibung

Die Erfindung betrifft eine Vorrichtung zum Beschäumen eines vorgefertigten Spritzgußteils bzw. Trägers mit schäumbarem Kunststoff bzw. mit Schaum nach dem Oberbegriff des Patentanspruchs 1 sowie ein Verfahren zum Beschäumen eines vorgefertigten Trägers mit Schaum nach dem Oberbegriff des Patentanspruchs 7

Formteile im Innenraum von Fahrzeugen, insbesondere von Kraftfahrzeugen, wie beispielsweise Armaturentafeln, Innenverkleidungen, Türseitenverkleidungen, Mittelkonsolen usw. sind häufig als ein sogenannter Kunststoffschaum-Träger-Verbund ausgebildet. Solche Fahrzeuginnenverkleidungen müssen unterschiedlichen technischen und ästhetischen Aufgaben gerecht werden.

Die fertiggestellten Fahrzeuginnenraumverkleidungsteile sollen beispielsweise dem Fahrzeug eine höherwertige Haptik geben, oder das Schallabsorptionsvermögen des Fahrzeugs erhöhen.

Bei der Herstellung derartiger Formteile wird ein Schaum, in der Regel ein Zweikomponentenkunststoff zwischen einem Formträger und dem zu beschäumenden oder auszuschäumenden Gegenstand, oder dem herzustellenden Schaumteil eingetragen. Nach dem Aushärten des Kunststoffschaumes wird der gebildete Gegenstand oder das gebildete Schaumteil wieder vom Formträger abgelöst. Die Kunststoffschaumschicht hat meist eine geringe Dicke, weshalb der Kunststoffschaum auch sehr feinporig sein muss und die Gaseinschlüsse sehr klein sein müssen.

Derartige Vorrichtungen zum Beschäumen sind aus der US 6 076 246 A, der JP H04 25414 A, der BE - 718 298 A, der US 2004/217498 A1, der US 5 789 457 A, der WO 2007/099445 A2, der DE 41 04 237 A1, der JP H03 208612 A und der US 2004/229013 A1 bekannt.

Beim Schäumen kann es jedoch passieren, dass die anfangs etwa gleich großen Gaseinschlüsse, die sich in dem Kunststoffschaum bilden, während des Schäumvorgangs oder unmittelbar nach dem Schäumvorgang sich lokal zu größeren Gaseinschlüssen verbinden, so dass der ausgehärtete Kunststoff keine gleichmäßige Form, Elastizität und Härte mehr aufweist. Auch können sich beim Schäumen einzelne größere Gaseinschlüsse und Gasansammlungen bilden, die beim Aushärten des Schaums lokal einfrieren.

Aufgabe der vorliegenden Erfindung ist es daher, eine Vorrichtung zum Herstellen eines Gegenstandes mit einer Schaumschicht, insbesondere zum Herstellen eines Fahrzeugbauteils bereitzustellen, mit welcher ein besonders feinporiger und über sein Volumen möglichst gleichmäßig große Gaseinschlüsse aufweisender, idealerweise lunkerfreier, Schaum hergestellt werden kann. Weitere Aufgabe der vorliegenden Erfindung ist es, ein Verfahren zum Beschäumen, Schäumen und/oder Ausschäumen eines Gegenstandsraumes mit solch einer Vorrichtung bereitzustellen, so daß ein Gegenstand hergestellt werden kann, der einen besonders feinporigen und über seinem Volumen möglichst gleichmäßig große Gasschlüsse aufweisenden, idealerweise lunkerfreien, Schaum aufweist. Schließlich ist es Aufgabe der Erfindung, einen solchen Gegenstand, beispielsweise ein Schaumteil, das z. B. mit einem Dekor und/oder einem Träger verbunden ist, mit hinreichend homogener Schaumporigkeit und -härte, bereitzustellen. Unter einem Dekor soll vorliegend eine vorgeformte Folie, eine Formhaut oder ein Leder- oder Kunstledernähkleid verstanden werden.

Diese Aufgabe wird gelöst durch eine Vorrichtung nach Anspruch 1 sowie ein Verfahren nach Anspruch 7. Vorteilhafte Ausführungsformen sind in den jeweiligen Unteransprüchen offenbart.

Die erfindungsgemäße Vorrichtung zum Beschäumen, insbesondere zum Frontschäumen und/oder Hinterschäumen eines vorgefertigten Trägers mit Schaum beruht auf der Erkenntnis, dass durch Vorsehen eines Siebs an der Austrittsöffnung, an der der Schaum austritt, eine optimale Durchmischung zwischen dem Kunststoff und den darin eingeschlossenen Gasbläschen erreicht wird.

Die erfindungsgemäße Vorrichtung zum Beschäumen, insbesondere zum frontschäumen und/oder Hinterschäumen eines vorgefertigten Trägers mit Schaum, beispielsweise mit Polyurethanschaum, weist einen Formträger auf, der eine als Matrize ausgebildete erste Halbform, einen von der Matrize teilweise begrenzten Gegenstandsraum zur Aufnahme von Schaum, sowie wenigstens eine Zuführdüse zum Eintragen des Schaums in den Gegenstandsraum aufweist. Die wenigstens eine Zuführdüse weist eine flächige Siebscheibe mit mehreren Sieblöchern auf, und die Siebscheibe ist in oder an der wenigstens einen Zuführdüse so angeordnet, dass durch die wenigstens eine Zuführdüse geleiteter Schaum durch die Sieblöcher der Siebscheibe in den Gegenstandsraum des Formträgers eingetragen wird, wobei der Schaum vorzugsweise unmittelbar bevor er in den Gegenstandsraum eingetragen wird, durch die Sieblöcher der Siebscheibe hindurchfließt.

Mit einer solchen Vorrichtung kann in dem Gegenstandsraum ein besonders gleichmäßiger und homogener Kunststoffschaum ausgebildet werden.

Dabei weist der Formträger eine als Patrize ausgebildete zweite Halbform auf, die wechselweise gegen die erste Halbform, also die Matrize öffen- und schließbar ist, wobei, wenn die beiden Halbformen des Formträgers gegeneinander geschlossen sind, der von der Matrize und von der Patrize umschlossene Raum den Gegenstandsraum bildet und definiert.

Der Gegenstandsraum ist in diesem Fall zu allen Seiten hin abgeschlossen, so dass, bei geeigneter Ausführung der Patrize und der Matrize die gesamte Oberflächenstruktur und -form des zu bildenden Gegenstands vorab vorgesehen werden kann.

Unter einer Matrize soll in dieser Schrift eine erste Halbform eines Formträgers, beispielsweise ein erstes Halbwerkzeug, verstanden werden, welches vertieft ausgebildet ist, so dass es beispielsweise ein bereits geformtes Dekor in seiner Vertiefung aufnehmen kann.

Unter einer Patrize soll in dieser Schrift eine zweite Halbform eines Formträgers verstanden werden, beispielsweise ein zweites Halbwerkzeug, welches, beispielsweise wie ein freistehender Prägestempel erhaben ausgebildet ist, zur Aufnahme des Trägers.

Die Patrize kann wenigstens eine Zuführdüse aufweisen, welche als Durchbohrung zum Zuführen des Schaums durch die Patrize in den Gegenstandsraum ausgebildet ist.

Alternativ oder zusätzlich kann die Matrize eine oder mehrere Zuführdüsen aufweisen, die als Durchbohrung zum Zuführen des Schaums durch die Matrize in den Gegenstandsraum ausgebildet sind. Dadurch werden die Kanäle, die dem Gegenstandsraum den Schaum zum Ausschäumen des Gegenstandsraums zuführen, bestimmt.

Erfindungsgemäß ist die wenigstens eine Siebscheibe flächig an der dem Gegenstandsraum zugewandte Seite der wenigstens einen Zuführdüse angeordnet.

In einer nicht erfindungsgemäßen Ausführung weist die erfinderische Vorrichtung einen Roboterarm und einen mit dem Roboterarm verbundenen Mischkopf auf, wobei die wenigstens eine Zuführdüse als Teil des Mischkopfes ausgebildet ist.

Bei der Herstellung von Interieur-Bauteilen für die Autoindustrie wird häufig ein Dekor aus einem anderen Material mit einer Schaumschicht versehen, um der Oberfläche des Bauteils dadurch die gewünschte Haptik zu verleihen.

Um eine besonders hochwertige Oberfläche zu bilden, kann das wenigstens ein Dekor aus Kunstleder oder Leder bestehen, oder zumindest Kunstleder oder Leder aufweisen.

In einer nicht erfindungsgemäßen Ausführung kann der Schaum mit einem eine Zuführdüse aufweisenden Mischkopf, welcher mit einem Roboter verbunden ist, in den Gegenstandsraum eingetragen werden.

Die flächige Siebscheibe ist vorteilhafterweise an der dem Gegenstandsraum zugewandten Seite der Zuführdüse ausgebildet. Erfindungsgemäß wird der Schaum dann, unmittelbar nachdem er die flächige Siebscheibe passiert hat, direkt in den Gegenstandsraum eingetragen werden. Darüber hinaus ist in diesem Fall ein leichter Austausch der flächigen Siebscheibe möglich, insbesondere dann, wenn sie an die Zuführdüse angeschraubt oder angesteckt ist, oder nur anliegt und vom Träger gehalten wird.

Der Mischkopf kann einen Bereich aufweisen, welcher Zuleitungen zum Zuführen einzelner, beispielsweise zweier Komponenten eines Schaums aufweist, die nach Vermischen und chemischer Reaktion den Schaum ergeben. Da Schaum in der Regel sehr schnell aushärtet, sollte das Mischen der einzelnen Kunststoffkomponenten unmittelbar vor dem Eintragen des Schaums in den Gegenstandsraum, vorzugsweise in einem Mischkopf, erfolgen. Die flächige Siebscheibe ist daher vorteilhafterweise an der dem Gegenstandsraum zugewandten Seite einer Beschäumöffnung der wenigstens einen Zuführdüse ausgebildet oder angeordnet.

Je nach gewünschter Beschäumung kann die wenigstens eine Zuführdüse in der Matrize oder in der Patrize angeordnet sein. Die Matrize und/oder die Patrize sind vorzugsweise bewegliche Teile eines eine Form bildenden Formwerkzeugs, wobei Patrize und Matrize zum Öffnen des Formwerkzeugs voneinander wegbewegt werden können, und zum Schließen des Formwerkzeugs aufeinander zu bewegbar sind. Wenn das Formwerkzeug geschlossen ist, definiert und umschließt es den Gegenstandsraum.

In der erfinderischen Vorrichtung kann an der Patrize ein Träger angeordnet, der, vorzugsweise flächig, auf der den Gegenstandsraum begrenzenden Seite der Patrize aufsitzt.

Die Zuführdüse kann soweit in den Gegenstandsraum hineinragen, daß sie einen an der Seite des Formträgers, an welcher die Zuführdüse in den Gegenstandsraum hineinragt, angeordneten Träger durchdringen kann, wenn der Träger eine Öffnung zum Beschäumen durch die Zuführdüse aufweist.

Das erfinderische Verfahren zum Frontschäumen und/oder Hinterschäumen eines vorgefertigten Trägers mit einer Vorrichtung der beschriebenen Art, weist zumindest folgende Verfahrensschritte auf:
Zunächst wird der vorgefertigte Träger in den Gegenstandsraum eingebracht. Dann wird der Schaum durch wenigstens eine Zuführdüse und durch eine in oder an der Zuführdüse angeordnete, mehrere Sieblöcher aufweisende Siebscheibe in den Gegenstandsraum eingetragen. Der Gegenstandsraum wird dabei mit dem Schaum vollständig aufgefüllt. Nach dem Aushärten lassen des Schaums in dem Gegenstandsraum ist der Verbundgegenstand gebildet und kann der Vorrichtung entnommen werden.

Das erfinderische Verfahren zeichnet sich somit dadurch aus, dass der schäumbare Kunststoff bzw. der Schaum durch eine mehrere Sieblöcher aufweisende Siebscheibe gepresst wird, bevor er in den Gegenstandsraum eingetragen wird. Die Siebscheibe kann dabei beispielsweise ein Rastergitter sein. Sie kann beispielsweise aus Kunststoff bestehen oder auch aus einem Metall. Die Siebscheibe, kann eine runde Form, eine ovale Form, eine viereckige, rechteckige oder quadratische Form, eine Polygonform oder eine sonstige flächige Form aufweisen. Die in der Siebscheibe angeordneten Sieblöcher können ebenfalls rund, oval, rechteckig, quadratisch oder anderweitig ausgestaltet sein. Die Siebscheibe kann auch aus einem Textil- oder aus einem sonstigen löchrigen Gewebe bestehen.

Der Schaum wird, wenn er unmittelbar vorher durch die Siebscheibe gepresst wurde, feinporiger. Bereiche mit großen zusammenhängenden Gasansammlungen können im ausgehärteten Produkt dann nicht so leicht entstehen, da offenbar beim Durchpressen des Schaums durch die Sieblöcher der Siebscheibe ein größeres einzelnes Gasvolumen, das sich möglicherweise im Schaumbereich gebildet hat, dadurch, dass der Schaum durch mehrere Sieblöcher gleichzeitig gepresst wird, wieder in mehrere kleine Gasvolumina aufgeteilt werden, die voneinander beabstandet sind. Die Gasvolumina werden somit beim Durchpressen des Schaums durch die Sieblöcher verkleinert und wieder neu vermischt und bleiben so vereinzelt. Auf diese Weise kann ein hinreichend feinporiger Schaum erzeugt werden, dessen sehr kleine Gaseinschlüsse so langsam durch das Material wandern, daß der Kunststoff ausgehärtet ist, bevor sie sich wieder zu größeren Gaseinschlüssen vereinigen können, wodurch eine Vereinigung mehrerer Gaseinschlüsse zu einem größeren Gaseinschluss verhindert wird. Da der Schaum relativ schnell aushärtet, wird die Bewegung der Gaseinschlüsse zeitig beendet.

Um eine noch feinporigere Kunststoffgasverteilung zu erzeugen, kann der Schaum beispielsweise auch durch zwei oder mehrere, vorzugsweise hintereinander angeordnete Siebscheiben mit Sieblöchern gepresst werden, bevor er in den Gegenstandsraum eingetragen wird.

Erfindungsgemäß weist der Formträger eine als Matrize ausgebildete erste Halbform, sowie eine als Patrize ausgebildete zweite Halbform auf, und wird zum Bilden des Gegenstandsraums zwischen der ersten Halbform und der zweiten Halbform vor dem Eintragen des Schaums geschlossen.

Nicht erfindungsgemäß kann der Schaum alternativ durch eine als Teil eines mit einem Roboterarm verbundenen Mischkopfes ausgebildete Zuführdüse in den Gegenstandsraum eingetragen werden, wobei nach dem Auffüllen des Gegenstandsraums mit dem Schaum der Gegenstandsraum zum Aushärten lassen des Schaums mit einer zweiten Halbform geschlossen wird. Die zweite Halbform ist dabei vorzugsweise eine Patrize, an welcher der vorgefertigte Träger, vorzugsweise flächig, vor dem Schließen des Gegenstandsraums angelegt worden ist.

Nach dem Aushärten des eingetragenen Schaums kann der Formträger geöffnet und der gebildete Verbundgegenstand, beispielsweise ein Fahrzeugbauteil für den Interieur-Bereich, insbesondere eine Fahrzeugtürinnenverkleidung oder eine Instrumententafel von dem Formträger abgelöst werden.

Vor dem Schließen des Formträgers kann zwischen der Matrize und der Patrize ein Dekor, beispielsweise eine Formhaut, vorzugsweise flächig, auf der dem Gegenstandsraum zugewandten Oberfläche der Matrize angeordnet werden.

Der Träger kann vor dem Schließen des Formträgers zwischen der Matrize und der Patrize, vorzugsweise flächig, auf der dem Gegenstandsraum zugewandten Oberfläche der Patrize angelegt werden.

Die Zuführdüse kann soweit in den Gegenstandsraum hineinragen, dass sie einen an der Seite des Formträgers, an welcher die Zuführdüse in den Gegenstandsraum hineinragt, angeordneten Träger durchdringen kann, wenn der Träger eine entsprechende Öffnung zum Beschäumen des Gegenstandsraums durch die Zuführdüse aufweist.

Der Schaum kann dann beispielsweise durch diese Öffnung in dem Träger in den Gegenstandsraum eingetragen werden. In diesem Fall wird der Träger frontgeschäumt.

In bevorzugten Ausführungsformen des Verfahrens wird zwischen der Matrize und der Patrize ein Dekor, vorzugsweise flächig, auf der dem Gegenstandsraum zugewandten Oberfläche der Matrize angeordnet, und/oder ein Träger, vorzugsweise flächig, auf der dem Gegenstandsraum zugewandten Oberfläche der Patrize angeordnet, bevor der Formträger geschlossen wird. Auf diese Weise ist es möglich, geschäumte Verbundstoffgegenstände herzustellen, die auf der einen Seite die gewünschte Haptik aufweisen, auf der anderen Seite jedoch als formstabile Elemente und Teile von beispielsweise Fahrzeugen verwendet werden können.

Zur Bildung einer Siebscheibe müssen die Sieblöcher nicht notwendigerweise rund oder oval sein. Sie können beispielsweise quadratisch, rechteckig, rautenförmig oder dreieckig ausgebildet sein. Die Siebscheibe kann beispielsweise auch als Rastergitter ausgebildet sein.

Für die Hinterschäumung/Frontschäumung von Formhäuten oder Trägern werden vorzugsweise Siebscheiben eingesetzt, die mehrere voneinander beabstandete Sieblöcher aufweisen. Die Siebscheibe kann auch rund, rechteckig oder quadratisch ausgebildet sein, oder beispielsweise die Form eines geschlossenen Polygons aufweisen.

Die in der nachfolgenden Beschreibung verwendeten Bezeichnungen wie oben, unten, links und rechts beziehen sich auf Ausführungsbeispiele und sollen in keiner Weise einschränkend sein, auch dann nicht, wenn sie sich auf bevorzugte Ausführungsformen beziehen.

Die Erfindung wird nachfolgend anhand von Zeichnungen näher erläutert. Es zeigen:
- Figur 1:: ein erstes Beispiel einer Siebscheibe,
- Figur 2:: ein zweites Beispiel einer Siebscheibe,
- Figur 3:: eine als Frontschäumvorrichtung ausgebildete Beschäumvorrichtung,
- Figur 4:: ein Verfahren zum Schäumen eines Gegenstandsraumes mit der Frontschäumvorrichtung von Figur 3,
- Figur 5:: ein Formwerkzeug mit eingelegtem Träger zur Frontbeschäumung,
- Figur 6:: eine Werkzeughälfte mit Mischkopf,
- Figur 7:: ein Formwerkzeug mit eingelegtem Träger und Dekor zur Hinterschäumung,
- Figur 8:: eine Matrize mit eingelegtem Dekor und einen Roboter.

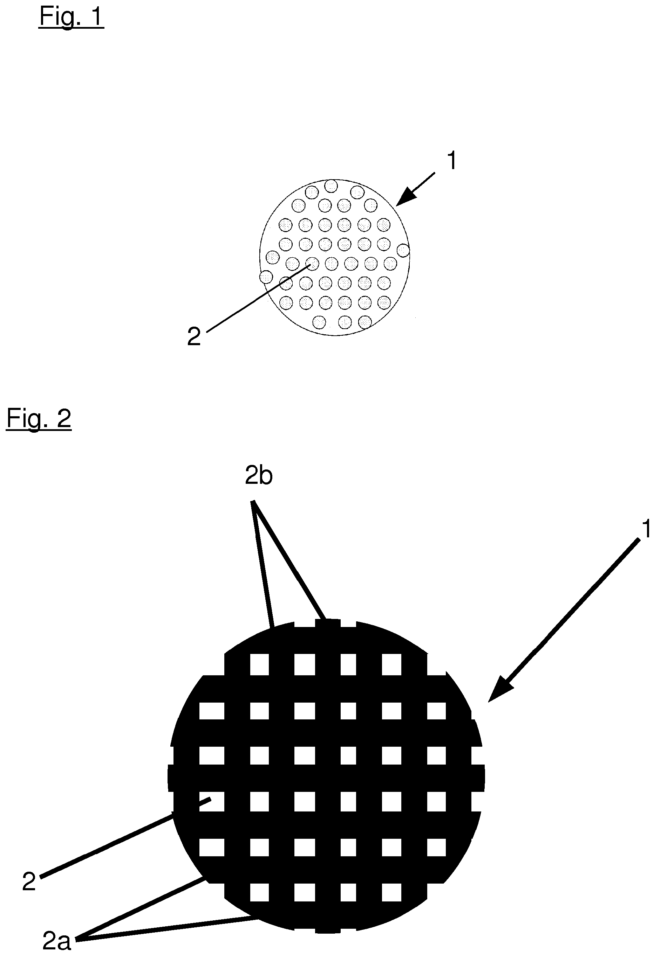

Figur 1 zeigt die schematische Darstellung einer Siebscheibe 1 mit Sieblöchern 2. Die Sieblöcher 2 sind in diesem Beispiel rund, in etwa gleich groß und gleichmäßig über die Fläche der ebenfalls runden Siebscheibe 1 verteilt angeordnet.

Figur 2 zeigt eine Siebscheibe 1, die aus einem flexiblen Kunststoffmaterial hergestellt ist. Die Sieblöcher 2 der Siebscheibe 1 in Figur 2 sind im Wesentlichen rechteckig bzw. quadratisch ausgebildet. Die Siebscheibe 1 ist in diesem Ausführungsbeispiel als ein Geflecht von mehreren einzelnen Kunststoffstreifen ausgebildet. Dabei werden parallel zueinander angeordnete erste Kunststoffstreifen 2a mit im Wesentlichen parallel zueinander angeordneten zweiten Kunststoffstreifen 2b verwoben, wobei die ersten Kunststoffstreifen 2a mit den zweiten Kunststoffstreifen 2b verschmolzen werden und wobei die ersten Kunststoffstreifen 2a im Wesentlichen senkrecht zu den zweiten Kunststoffstreifen 2b angeordnet sind. Auf diese Weise kann ein Kunststoffgeflecht hergestellt werden, aus welchem dann, je nach gewünschter Form, die Siebscheiben 1 ausgeschnitten oder ausgestanzt werden können.

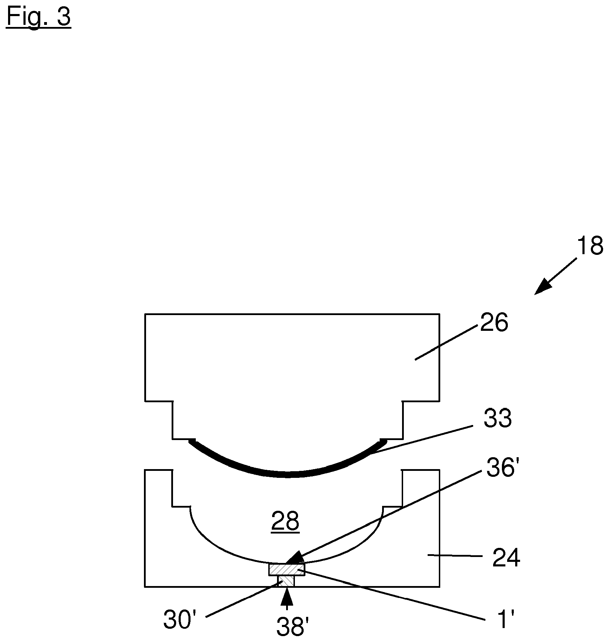

Figur 3 zeigt eine als Frontschäumvorrichtung ausgebildete Beschäumvorrichtung zur Herstellung eines beschäumten Gegenstandes 12, mit einer Form 18, die aus zwei Halbformen, nämlich einer Matrize 24 und einer Patrize 26 besteht. An einer einem Gegenstandsraum 28 zugewandten Seite der Patrize 26 liegt flächig ein Träger 33 an. Die Beschäumung mit Schaum 22 erfolgt von außen dadurch, daß der Schaum 22 durch eine Beschäumungsöffnung 38', eine in einer Matrize 24 angeordnete Zuführdüse 30', eine in der Zuführdüse 30' angeordnete Siebscheibe 1' und eine Beschäumungsöffnung 36' in den Gegenstandsraum 28 gepresst wird. Nachdem der Schaum 22 in dem Gegenstandsraum 28 ausgehärtet ist und die Form 18 geöffnet worden ist, kann der geschäumte Gegenstand 12 mit dem am Träger 33 fixierten, ausgehärteten Schaum 22` entnommen werden.

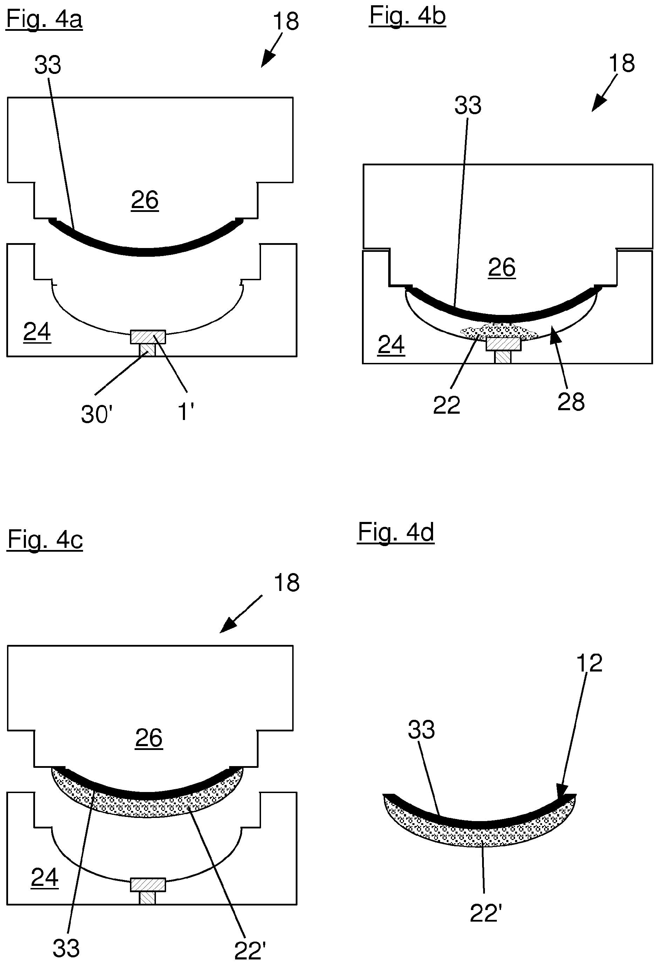

Die Figuren 4a bis 4d zeigen ein Verfahren zum Schäumen eines Gegenstandsraumes mit der beschriebenen Frontschäumvorrichtung. Figur 4a zeigt den Formträger 18, der aus zwei Halbformen, nämlich der Matrize 24 und der Patrize 26 besteht, im geöffneten Zustand. Ein vorgefertigter Träger 33 wird flächig an die Patrize 26 angelegt. Die Matrize 24 weist die Zuführdüse 30', sowie die Siebscheibe 1' auf. Nachdem der Träger 33 flächig an die Oberfläche der Patrize 26 angelegt worden ist, werden zur Bildung des Gegenstandsraums 28 die beiden Halbformen 24, 26 des Formträgers 18 gegeneinander geschlossen und der Gegenstandsraum 28 durch die Zuführdüse 30' und die Siebscheibe 1' mit Schaum 22 aufgefüllt, wie dies in Figur 4b dargestellt ist. Das von dem Schaum 22 dabei verdrängte Gas entweicht aus dem Gegenstandsraum 28 durch nicht weiter dargestellte Entlüftungsbohrungen. Der Schaum 22 wird solange durch die Zuführdüse 30' und das Siebelement 1` dem Gegenstandsraum 28 zugeführt, bis er den gesamten Gegenstandsraum 28 ausfüllt. Sobald dies der Fall ist, wird die Zuführdüse unterbrochen. Der den Gegenstandsraum 28 ausfüllende Schaum 22 härtet nun in der geschlossenen Form 18 aus. Anschließend wird, wie in Figur 4c dargestellt, die Form 18 geöffnet und der Träger 33 mit dem daran fixierten, ausgehärtetem Schaum 22` entnommen. Figur 4d zeigt den geschäumten Verbundgegenstand 12, der aus dem Träger 33, sowie aus dem ausgehärtetem Schaum 22` besteht.

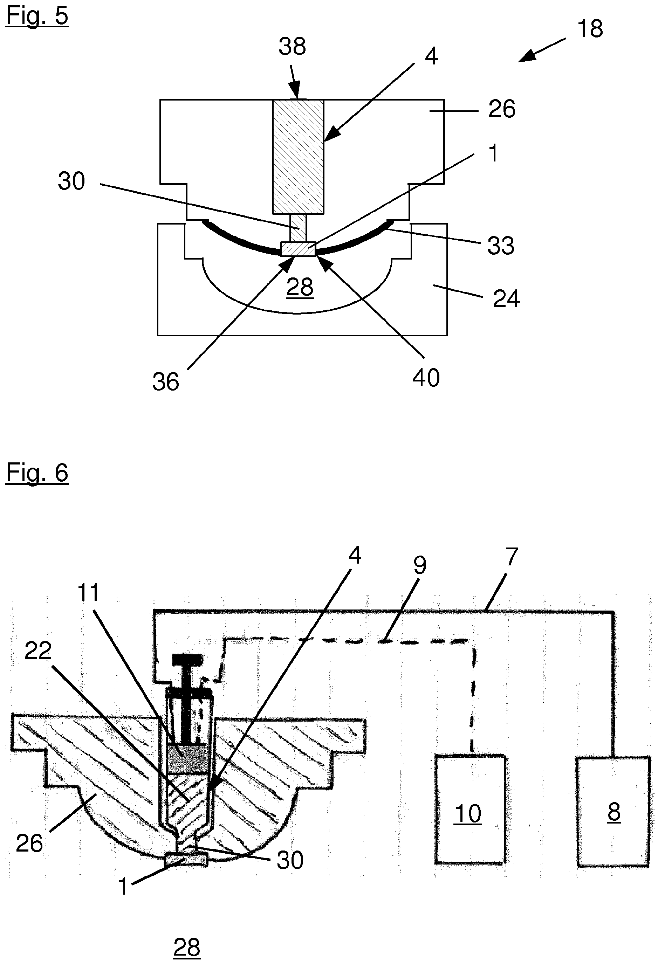

Figur 5 zeigt als weiteres Beispiel einer Beschäumungsvorrichtung eine Frontschäumvorrichtung, bei welcher der Formträger 18 wieder eine Matrize 24 und eine Patrize 26 aufweist. In dem Formträger 18 ist ein Gegenstandsraum 28 ausgebildet, wenn der Formträger 18 geschlossen ist. Die Patrize 26 weist eine Durchbohrung auf, die eine Zuführdüse 30 bildet, an deren dem Gegenstandsraum 28 zugewandten Ende eine Siebscheibe 1 angeordnet ist. In dem Gegenstandsraum 28 ist ein Träger 33 angeordnet, der flächig an der dem Gegenstandsraum 28 zugewandten Seite der Patrize 26 anliegt. Die Siebscheibe 1 ist an der dem Gegenstandsraum 28 zugewandten Seite einer Beschäumungsöffnung 36 der Patrize 26 des Formträgers 18 angeordnet.

Durch eine Beschäumöffnung 38 kann, wenn der Formträger 18 geschlossen und der Gegenstandsraum 28 zwischen der Patrize 26 und der Matrize 24 ausgebildet ist, ein Schaum 22 durch die Zuführdüse 30 und die Siebscheibe 1, sowie durch eine Öffnung 40 des Trägers 33, in den Gegenstandsraum 28 eingeleitet werden, um den Träger 33 frontzubeschäumen. Da der Schaum 22 durch die Siebscheibe 1 geleitet wird, bevor er in den Gegenstandsraum 28 eindringt, entsteht ein homogener, gleichmäßiger und lunkerfreier Schaum. Der Schaum 22 verbindet sich in dem Gegenstandsraum 28 mit dem Träger 33 und härtet in dem Gegenstandsraum 28 aus. Nachdem der Schaum 22 ausgehärtet ist, kann die Form 18, bzw. der Formträger 18 geöffnet und der Verbundgegenstand 12 mit dem ausgehärteten Schaum 22` und dem Träger 33 entnommen werden. Selbstverständlich kann auch in diesem Ausführungsbeispiel ein mehrkomponentiger Kunststoffschaum verwendet werden, dessen einzelne Komponenten in einem oberhalb der Beschäumöffnung 38 der Patrize angeordneten Mischkopf 4 miteinander vermischt werden.

Figur 6 zeigt eine detaillierte Darstellung des oberen oder unteren Teils des Schäumwerkzeugs, wie z.B. von Figur 5. Wie dargestellt, wird eine vorgegebene Menge einer ersten Kunststoffkomponente 8 über eine erste Zuleitung 7, sowie eine vorgegebene Menge einer zweiten Kunststoffkomponente 10 über eine zweite Zuleitung 9 dem Mischkopf 4 zugeführt. In dem Mischkopf 4 bildet sich sodann eine bestimmte Menge von Schaum 22, die mit Hilfe eines Druckkolbens 11 über die Zuführdüse 30 des Mischkopfs 4 und das Siebelement 1 in den Gegenstandsraum 28 gepresst werden kann. Der Mischkopf 4 mit der Zuführdüse 30, sowie dem Druckkolben 11 ist dabei in der Patrize 26 aufgenommen.

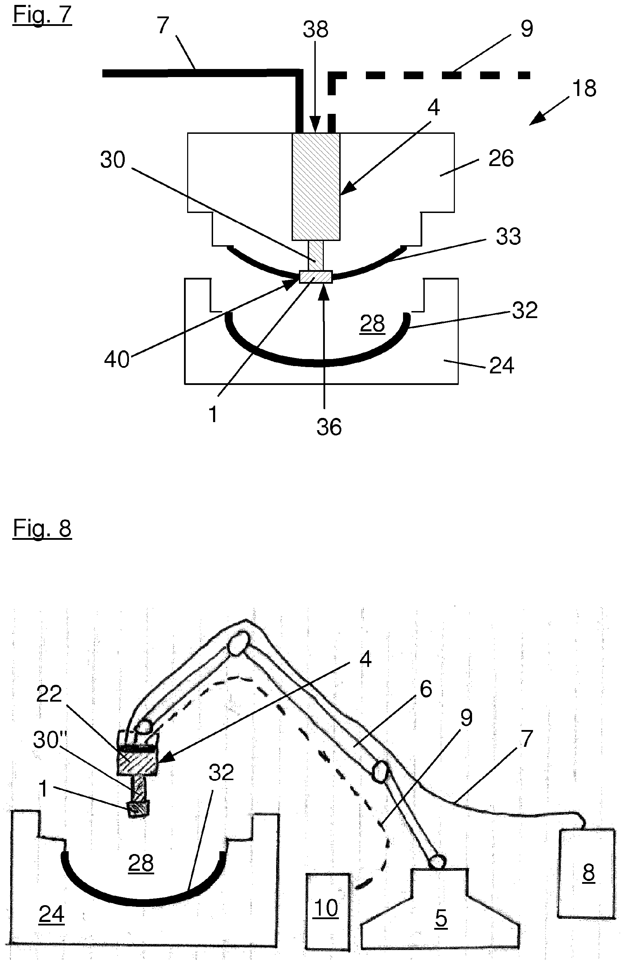

Figur 7 zeigt eine als Hinterschäumvorrichtung ausgebildete Beschäumvorrichtung mit einer Matrize 24 und einer Patrize 26. In dem Gegenstandsraum 28 sind ein Dekor 32 und ein Träger 33 angeordnet. Das Dekor 32 liegt flächig an der dem Gegenstandsraum 28 zugewandten Seite der Matrize 24 an. Direkt über der Siebscheibe 1 ist die Zuführdüse 30 für die Zuführung des Schaum 22 angeordnet, der auf diese Weise direkt durch die Siebscheibe 1 in den Gegenstandsraum 28 eingebracht werden kann. Der Träger 33 liegt flächig an der dem Gegenstandsraum 28 zugewandten Seite der Patrize 26 an. Der Träger 33 ist ein bereits vorgefertigter Träger, welcher eine Öffnung 40 aufweist, in der die mit der Zuführdüse 30 verbundene Siebscheibe 1 angeordnet ist. Oberhalb der Zuführdüse 30 ist wiederum eine Mischkammer 4 angeordnet, in welcher der Schaum 22 aus einer ersten Kunststoffkomponente 8 und einer zweiten Kunststoffkomponente 10 gebildet wird. Die erste Kunststoffkomponente 8 wird der Mischkammer 4 über eine erste Zuleitung 7 zugeführt. Die zweite Kunststoffkomponente 10 wird der Mischkammer 4 über eine zweite Zuleitung 9 zugeführt.

Der Schaum 22 wird nun durch die Zuführdüse 30, die Siebscheibe 1 und die in dem Träger 33 angeordnete Öffnung 40 in den Gegenstandsraum 28 zwischen dem Dekor 32 und dem Träger 33 eingeleitet. Nachdem der Schaum 22 ausgehärtet ist, kann die Form 18 geöffnet, und der geschäumte Verbundgegenstand 12 mit dem ausgehärteten Kunststoffschaum, also dem ausgehärteten Schaum 22', dem Dekor 32 und dem vorgefertigten Träger 33 entnommen werden.

Figur 8 zeigt ein nicht erfindungsgemäßes Beispiel einer Beschäumvorrichtung.

In diesem Ausführungsbeispiel wird ein Mischkopf 4, aufweisend eine Zuführdüse 30" mit Siebscheibe 1, sowie einen Druckkolben 11 von einem Roboter 5 mittels eines Roboterarms 6 gesteuert. Der Mischkopf 4 wird über eine erste Zuleitung 7, mit einer ersten Kunststoffkomponente 8 und über eine zweite Zuleitung 9 mit einer zweiten Kunststoffkomponente 10 versorgt. Die beiden Kunststoffkomponenten 8, 10 werden dem Mischkopf 4 durch den Druckkolben 11 zugeleitet und in dem Mischkopf 4 miteinander, zur Bildung eines Schaums 22 vermischt. Der Schaum 22 wird dann über die Zuführdüse 30" und die Siebscheibe 1 dem Gegenstandsraum 28 des Formwerkzeugs 18 zugeführt. Ist der Schaum 22 dem Gegenstandsraum 28 zugeführt, so härtet der Schaum 22 in dem Gegenstandsraum 28 aus und kann im Anschluss daran dem Formwerkzeug 18 entnommen werden.

Die Erfindung wurde anhand bevorzugter Ausführungsbeispiele erläutert ohne auf diese Ausführungsbeispiele weiter beschränkt zu sein. So kann beispielsweise der Mischkopf 4 in die Matrize oder Patrize, beispielsweise formschlüssig, integriert sein. Der zugeführte Kunststoff kann einkomponentig, zweikomponentig oder auch mehrkomponentig sein. Selbstverständlich können auch die Formen und/oder Formträger, die Matrizen und/oder die Patrizen Entlüftungsbohrungen aufweisen, die dazu dienen, das durch den Schaum verdrängte Gas aus dem Gegenstandsraum auszuleiten. Die Merkmale der einzelnen Ausführungsbeispiele sind somit frei mit funktionell gleichwirkenden Merkmalen anderer Ausführungsbeispiele kombinierbar oder beliebig austauschbar, sofern der Erfindungsgedanke dabei erhalten bleibt.

### Bezugszeichenliste

- 1: Siebscheibe (Patrize)
- 1': Siebscheibe (Matrize)
- 2: Sieblöcher
- 2a: Erste Kunststoffstreifen
- 2b: Zweite Kunststoffstreifen
- 4: Mischkopf
- 5: Roboter
- 6: Roboterarm
- 7: Erste Zuleitung
- 8: Erste Kunststoffkomponente
- 9: Zweite Zuleitung
- 10: Zweite Kunststoffkomponente
- 11: Druckkolben
- 12: Gegenstand, Verbundgegenstand, Schaumteil
- 18: Formträger, Formwerkzeug, Schaumwerkzeug
- 22: Schaum
- 22': ausgehärteter Schaum
- 24: Matrize, erste Halbform
- 26: Patrize, zweite Halbform
- 28: Gegenstandsraum
- 30: Zuführdüse, Patrize
- 30': Zuführdüse, Matrize
- 30": Zuführdüse, Mischkopf
- 32: Formhaut, Dekor, Haut, Folie
- 33: Träger
- 36: Beschäumöffnung, Patrize
- 36': Beschäumöffnung, Matrize
- 38: Beschäumöffnung, Patrize
- 38': Beschäumöffnung, Matrize
- 40: Öffnung, Spritzgußteil

## Patentansprüche

1. Vorrichtung zum Beschäumen, insbesondere zum Frontschäumen, Zwischenschäumen und/oder Hinterschäumen eines vorgefertigten Trägers (33) mit Schaum (22), beispielsweise mit Polyurethan, aufweisend einen Formträger (18), der
- eine als Matrize (24) ausgebildete erste Halbform,
- einen von der Matrize (24) teilweise begrenzten Gegenstandsraum (28) zur Aufnahme von Schaum (22),
- sowie wenigstens eine Zuführdüse (30, 30', 30") zum Zuführen des Schaums (22) in den Gegenstandsraum (28) aufweist,
- wobei der Formträger (18) eine als Patrize (26) ausgebildete zweite Halbform aufweist, die wechselweise gegen die Matrize (24) öffen- und schließbar ist, wobei, wenn die Matrize (24) gegen die Patrize, (26) des Formträgers (18) geschlossen ist, der von der Matrize (24) und der Patrize (26) umschlossene Raum den Gegenstandsraum (28) bildet,
**dadurch gekennzeichnet, dass**
die wenigstens eine Zuführdüse (30, 30', 30") eine flächige Siebscheibe (1) mit mehreren Sieblöchern (2) aufweist und die Siebscheibe (1) in oder an der wenigstens einen Zuführdüse (30, 30', 30") so angeordnet ist, dass durch die wenigstens eine Zuführdüse (30, 30', 30") geleiteter Schaum (22) durch die Sieblöcher (2) der Siebscheibe (1) in den Gegenstandsraum (28) des Formträgers (18) eingetragen wird, wozu die wenigstens eine Siebscheibe (1) flächig an der dem Gegenstandsraum (28) zugewandte Seite der wenigstens einen Zuführdüse (30, 30', 30") derart angeordnet ist, dass der Schaum (22) unmittelbar nachdem er die flächige Siebscheibe (1) passiert hat, direkt in den geschlossenen Gegenstandsraum (28) eingetragen wird.

2. Vorrichtung nach Anspruch 1,
**dadurch gekennzeichnet, dass**
die Patrize (26) wenigstens eine der wenigstens einen Zuführdüse (30) aufweist, die als Durchbohrung zum Zuführen des Schaums (22) durch die Patrize (26) in den Gegenstandsraum (28) ausgebildet ist.

3. Vorrichtung nach einem der vorigen Ansprüche,
**dadurch gekennzeichnet, dass**
die Matrize (24) wenigstens eine der wenigstens einen Zuführdüse (30`) aufweist, die als Durchbohrung zum Zuführen des Schaums (22) durch die Matrize (24) in den Gegenstandsraum (28) ausgebildet ist.

4. Vorrichtung nach einem der vorigen Ansprüche,
**dadurch gekennzeichnet, dass**
die flächige Siebscheibe (1) an der dem Gegenstandsraum (28) zugewandten Seite der wenigstens einen Zuführdüse (30, 30', 30") ausgebildet ist.

5. Vorrichtung nach einem der vorigen Ansprüche, **dadurch gekennzeichnet, dass**
der Mischkopf (4) einen ausgebildeten Bereich aufweist, welcher Zuleitungen (7, 9) zum Zuführen von zwei einzelnen Komponenten (8, 10) eines Schaums aufweist, wobei die zwei einzelnen Komponenten (8, 10), wenn sie in dem ausgebildeten Bereich miteinander gemischt werden, miteinander chemisch reagieren und den Schaum (22) bilden.

6. Vorrichtung nach einem der vorigen Ansprüche, **dadurch gekennzeichnet, dass**
die Zuführdüse (30) soweit in den Gegenstandsraum (28) hineinragt, dass sie einen an der Seite des Formträgers (18), an welcher die Zuführdüse (30,) in den Gegenstandsraum (28) hineinragt, angeordneten Träger (33) durchdringen kann, wenn der Träger eine Öffnung (40) zum Beschäumen durch die Zuführdüse aufweist.

7. Verfahren zum Beschäumen, insbesondere zum Frontschäumen und/oder Hinterschäumen eines vorgefertigten Trägers (33) mit Schaum mittels einer Vorrichtung nach einem der Ansprüche 1 bis 7, aufweisend folgende Verfahrensschritte:
a) Einbringen des vorgefertigten Trägers (33) in den Gegenstandsraum (28)
b) Eintragen des Schaums (22) durch wenigstens eine Zuführdüse (30, 30', 30") und durch eine in oder an der Zuführdüse (30, 30', 30") angeordnete, mehrere Sieblöcher (2) aufweisende Siebscheibe (1) in den Gegenstandsraum (28), wobei der Schaum (22) unmittelbar nachdem er die flächige Siebscheibe (1) passiert hat, direkt in den Gegenstandsraum (28) eingetragen wird,
c) Auffüllen des Gegenstandsraums (28) mit dem Schaum (22),
d) Bilden des Verbundgegenstands (12) durch Aushärten lassen des eingetragenen Schaums (22) in dem Gegenstandsraum (28),
**dadurch gekennzeichnet, dass**
der Formträger (18) eine als Matrize (24) ausgebildete erste Halbform und eine als Patrize (26) ausgebildete zweite Halbform aufweist, und zum Bilden des Gegenstandsraums (28) zwischen der ersten Halbform (24) und der zweiten Halbform (26) vor dem Eintragen des Schaums (22) geschlossen wird.

8. Verfahren nach Anspruch 7, **dadurch gekennzeichnet, dass**
der Formträger (18) nach dem Aushärten des eingetragenen, Schaums (22) geöffnet und der gebildete Verbundgegenstand (12) von dem Formträger (18) entnommen wird.

9. Verfahren nach einem der Ansprüche 7 oder **dadurch gekennzeichnet, dass**
vor dem Schließen des Formträgers (18) zwischen der Matrize (24) und der Patrize (26) ein Dekor (32), vorzugsweise flächig, auf der dem Gegenstandsraum (28) zugewandten Oberfläche der Matrize (24) angeordnet wird.

10. Verfahren nach einem der Ansprüche 7 bis **dadurch gekennzeichnet, dass**
der Träger (33) vor dem Schließen des Formträgers (18) zwischen der Matrize (24) und der Patrize (26), vorzugsweise flächig, auf der dem Gegenstandsraum (28) zugewandten Oberfläche der Patrize (26) angelegt wird.

11. Verfahren nach Anspruch 10, **dadurch gekennzeichnet, dass**
der Schaum (22) durch eine Öffnung (40) in dem Träger (33) in den Gegenstandsraum (28) eingetragen wird.

## Claims

1. Apparatus for foaming, in particular for front foaming, intermediate foaming and/or back foaming of a prefabricated carrier (33) using foam (22) with, for example, polyurethane, and comprising a mould carrier (18) which comprises
- a first half-mould, implemented as a die (24),
- a product cavity (28), partly delimited by the die (24), for receiving the foam (22),
- as well as at least one delivery nozzle (30, 30', 30") for delivering the foam (22) into the product cavity (28),
- wherein the mould carrier (18) comprises a second half-mould, implemented as an upper die (26), which is alternately openable and closeable against the die (24), wherein, when the die (24) is closed against the upper die (26) of the mould carrier (18), the space enclosed by the die (24) and the upper die (26) form the product cavity (28),
**characterized in that**
the at least one delivery nozzle (30, 30', 30") comprises a flat perforated disc (1) having numerous sieve holes (2) and **in that** the perforated disc (1) is arranged in or on the at least one delivery nozzle (30, 30', 30") such that the foam (22) passing through the at least one delivery nozzle (30, 30', 30") is delivered into the product cavity (28) of the mould carrier (18) through the sieve holes (2), for which the at least one perforated disc (1) is flatly arranged on the side of the at least one delivery nozzle (30, 30', 30") which faces the product cavity (28) such that the foam (22) is delivered directly into the closed product cavity (28) immediately after passing through the flat perforated disc (1).

2. Apparatus in accordance with claim 1,
**characterized in that**
the upper die (26) comprises at least one of the at least one delivery nozzle (30), which is formed as a through hole for delivering the foam (22) through the upper die (26) into the product cavity (28).

3. Apparatus in accordance with either of the preceding claims,
**characterized in that**
the die (24) comprises at least one of the at least one delivery nozzle (30), which is formed as a through hole for delivering the foam (22) through the die (24) into the product cavity (28).

4. Apparatus in accordance with any of the preceding claims,
**characterized in that**
the flat perforated disc (1) is implemented on the side of the at least one delivery nozzle (30, 30', 30") which faces the product cavity (28).

5. Apparatus in accordance with any of the preceding claims,
**characterized in that**
the mixing head (4) comprises a formed region which comprises feed lines (7, 9) for the supply of two individual components (8, 10) of a foam, wherein the two individual components (8, 10) chemically interact with each other and form the foam (22) when they are mixed together in the formed region.

6. Apparatus in accordance with any of the preceding claims,
**characterized in that**
the delivery nozzle (30) extends into the product cavity (28) to a distance at which it can pass through a carrier (33) arranged on the side of the mould carrier (18) at which the delivery nozzle (30) extends into the product cavity (28), when the carrier comprises an opening (40) for foaming through the delivery nozzle.

7. Method for foaming, in particular for front foaming and/or back foaming of a prefabricated carrier (33), with foam, by means of an apparatus in accordance with any of claims 1 to 6, comprising the following method steps:
a) placing the prefabricated carrier (33) into the product cavity (28);
b) delivering the foam (22), through at least one delivery nozzle (30, 30', 30") and through a perforated disc (1), which comprises numerous sieve holes (2), and which is arranged in or on the delivery nozzle (30, 30', 30"), into the product cavity (28), wherein the foam (22) is delivered directly into the product cavity (28) after passing through the flat perforated disc (1),
c) filling the product cavity (28) with the foam (22),
d) forming the composite article (12) by allowing the delivered foam (22) to harden in the product cavity (28),
**characterized in that**
the mould carrier (18) comprises a first half-mould, implemented as a die (24) and a second half-mould, implemented as an upper die (26), and is closed before the foam (22) is delivered to form the product cavity (28) between the first half-mould (24) and the second half-mould (26).

8. Method in accordance with claim 7,
**characterized in that**
the mould carrier (18) is opened after the hardening of the delivered foam (22) and the formed composite article (12) is removed from the mould carrier (18).

9. Method in accordance with either of claims 7 or 8,
**characterized in that**
a decal (32) is arranged between the die (24) and the upper die (26), preferably flatly, on the surface of the die (24) facing the product cavity (28) before the closing of the mould carrier (18).

10. Method in accordance with any of claims 7 to 9,
**characterized in that**
the carrier (33) is placed between the die (24) and the upper die (26), preferably flatly, on the surface of the upper die (26) facing the product cavity (28) before the closing of the mould carrier (18).

11. Method in accordance with claim 10,
**characterized in that**
the foam (22) is delivered into the product cavity (28) through an opening (40) in the carrier (33).

## Revendications

1. Dispositif pour mousser notamment pour un moussage frontal, un moussage intermédiaire et/ou un moussage arrière d'un support préfabriqué (33) avec de la mousse (22), par exemple, avec du polyuréthane, comprenant un support de moule (18) qui a :
- un premier demi-moule en forme de matrice (24),
- un espace-objet (28) délimité partiellement par la matrice (24) pour recevoir la mousse (22),
- ainsi qu'au moins une buse d'alimentation (30, 30', 30") pour fournir la mousse (22) à l'espace-objet (28),
- le support de moule (18) comportant un second demi-moule en forme de patrice (26) qui peut s'ouvrir et se fermer alternativement par rapport à la matrice (24),
* lorsque la matrice (24) est fermée contre la patrice (26) du support de moule (18), le volume enfermé par la matrice (24) et la patrice (26) constitue l'espace-objet (28),
dispositif **caractérisé en ce que**
au moins la buse d'alimentation (30, 30', 30") comporte un disque-tamis plat (1) à plusieurs orifices de tamis (2) et une buse d'alimentation (30, 30', 30") est prévue sur ou dans le disque-tamis (1) de façon que la mousse (22) arrivant par la buse (30, 30', 30") traverse les orifices de tamis (2) du disque-tamis (1) et arrive dans l'espace-objet (28) du support de moule (18), et pour cela, au moins un disque-tamis (1) est installé à plat contre le côté de la buse d'alimentation (30, 30', 30") tournée vers l'espace-objet (28) de façon que la mousse (22) après avoir traversé le disque-tamis plat (1), arrive directement dans l'espace-objet (28), fermé.

2. Dispositif selon la revendication 1,
**caractérisé en ce que**
la patrice (26) comporte au moins l'une des buses (30) réalisée comme perçage traversant pour fournir la mousse (22) à travers la patrice (26) dans l'espace-objet (28).

3. Dispositif selon l'une des revendications précédentes,
**caractérisé en ce que**
la matrice (24) comporte au moins l'une des buses d'alimentation (30') qui est réalisée sous la forme d'un perçage traversant pour fournir la mousse (22) à travers la matrice (24) dans l'espace-objet (28).

4. Dispositif selon l'une des revendications précédentes,
**caractérisé en ce que**
le disque-tamis plat (1) est réalisé sur le côté d'au moins une buse d'alimentation (30, 30', 30") tournée vers l'espace-objet (28).

5. Dispositif selon l'une des revendications précédentes,
**caractérisé en ce que**
la tête mélangeuse (4) a une zone développée qui comporte des conduites d'alimentation (7, 9) pour fournir deux composants distincts (8, 10) d'une mousse, les deux composants distincts (8, 10) lorsqu'ils sont mélangés dans la zone développée, réagissent entre eux et forment la mousse (22).

6. Dispositif selon l'une des revendications précédentes,
**caractérisé en ce que**
la buse d'alimentation (30) pénètre dans l'espace-objet (28) de façon à traverser un support (33) prévu sur le côté du support de moule (18) où la buse d'alimentation (30) pénètre dans l'espace-objet (28) si le support a une ouverture (40) pour mousser par la buse d'alimentation.

7. Procédé pour mousser notamment pour le moussage frontal et/ou le moussage arrière d'un support préfabriqué (33) avec de la mousse (22) avec un dispositif selon l'une des revendications 1 à 7, comprenant les étapes de procédé suivantes consistant à :
a) introduire le support préfabriqué (33) dans l'espace-objet (28),
b) introduire dans l'espace-objet (28) la mousse (22) par au moins une buse d'alimentation (30, 30', 30") à travers un disque-tamis (1) comportant plusieurs orifices de tamis (2), et qui est installé dans ou sur la buse d'alimentation (30, 30', 30"),
* la mousse (22) après avoir traversé le disque tamis plat (1), arrivant directement dans l'espace-objet (28),
c) remplir l'espace-objet (28) avec la mousse (22),
d) former l'objet composite (12) en laissant durcir la mousse (22) introduite dans l'espace-objet (28),
procédé **caractérisé en ce que**
le support de moule (18) comporte un premier demi-moule en forme de matrice (24) et un second demi-moule en forme de patrice (26) et pour former l'espace-objet (28) entre le premier demi-moule (24) et le second demi-moule (26) on ferme avant d'introduire la mousse (22).

8. Procédé selon la revendication 7,
**caractérisé en ce que**
après le durcissement de la mousse (22) introduite, on ouvre le support de moule (18) et on extrait l'objet composite (12) ainsi formé du support de moule (18).

9. Procédé selon la revendication 7 ou 8,
**caractérisé en ce que**
avant de fermer le support de moule (18), on installe un décor (32) de préférence plat, entre la matrice (24) et la patrice (26), le décor étant installé sur la surface de la matrice (24) tournée vers l'espace-objet (28).

10. Procédé selon l'une des revendications 7 à 9,
**caractérisé en ce que**
avant de fermer le support de moule (18) entre la matrice (24) et la patrice (26) on applique le support (33) de préférence à plat sur le dessus de la patrice (26), tourné vers l'espace-objet (28).

11. Procédé selon la revendication 10,
**caractérisé en ce que**
on introduit la mousse (22) dans l'espace-objet (28) à travers une ouverture (40) du support (33).
